# EUROPEAN PATENT APPLICATION

(11) **EP 2 868 364 A1**
(43) Date of publication of application: **06.05.2015**
(21) Application number: 13191200.8
(22) Date of filing: 31.10.2013
(51) Int. Cl.: B01D 53/14, C01B 17/04, C01B 17/16, C10L 3/10

(54) **Process for producing a purified gas stream**

(71) Applicant: SHELL INTERNATIONAL RESEARCH MAATSCHAPPIJ B.V., 2596 HR Den Haag (NL)
(72) Inventor: The designation of the inventor has not yet been filed
(74) Representative: Matthezing, Robert Maarten

(57) **Abstract**

The invention relates to a process for producing a purified gas stream from a feed gas stream comprising contaminants, the process comprising the following steps:
(a) removing contaminants from the feed gas stream to obtain the purified gas stream and a sour gas stream comprising hydrogen sulphide and mercaptans;
(b) separating the sour gas stream comprising hydrogen sulphide and mercaptans into a gas stream enriched in hydrogen sulphide and a residual gas stream comprising mercaptans;
(c) converting hydrogen sulphide in the gas stream enriched in hydrogen sulphide to elemental sulphur in a Claus unit, thereby obtaining a first off-gas stream comprising sulphur dioxide;
(d) converting sulphur dioxide in the first off-gas stream comprising sulphur dioxide to hydrogen sulphide in a Claus off-gas treating reactor to obtain a second off-gas stream comprising hydrogen sulphide;
(e) converting mercaptans from the residual gas stream comprising mercaptans to hydrogen sulphide in a mercaptans conversion reactor to obtain a residual gas stream comprising hydrogen sulphide,

wherein step (e) comprises contacting the residual gas stream comprising mercaptans with a hydrogenation catalyst comprising nickel and molybdenum or nickel and tungsten supported on a carrier, in the presence of hydrogen, at a temperature in the range of 260 to 350 °C.

## Description

### Field of the invention

The invention relates to a process for producing a purified gas stream from a feed gas stream comprising contaminants.

### Background to the invention

Gas streams such as from natural gas wells typically comprise contaminants such as carbon dioxide, hydrogen sulphide, mercaptans, carbonyl sulphide carbon disulphide and aromatic hydrocarbons such as benzene, toluene, ethylbenzene or xylene (BTEX) that need to be removed before that gas stream can be further used. Processes for removing sulphur-comprising contaminants and carbon dioxide from so-called "sour gas", i.e. a gas stream contaminated with sulphur compounds and/or carbon dioxide, are well known in the art. Such processes typically comprise an absorption step for removing sulphur compounds, carbon dioxide and aromatic hydrocarbons from the gaseous feed stream by contacting such gaseous feed stream with a solvent, for example an amine solvent, in an absorption tower. Thus a purified gaseous stream, often referred to as 'sweet gas' is obtained and a solvent loaded with contaminants. The loaded solvent is typically regenerated in a stripper to obtain lean solvent that is recycled to the absorption tower and a sour gas stream comprising the contaminants such as for example hydrogen sulphide, carbon dioxide, mercaptans and BTEX.

Such sour gas stream may be treated in a second absorption stage with an absorption tower and a stripper to obtain a gas stream further enriched in hydrogen sulphide and a residual gas stream mainly comprising carbon dioxide, mercaptans and BTEX.

In EP 1,338,557 is for example disclosed a process wherein contaminants are removed from a natural gas stream using an aqueous amine absorption liquid. The loaded amine absorption liquid obtained is regenerated, thereby producing a sour gas stream comprising H₂S, mercaptans (RSH) and CO₂. This sour gas stream is separated into a residual gas stream comprising RSH and a gas stream enriched in H₂S in a second absorption stage. The gas stream enriched in H₂S is subjected to a Claus process to produce elemental sulphur and a Claus off-gas. This Claus off-gas is then heated and mixed with the residual gas stream. The resultant mixed gas is transferred to a hydrogenation reactor, wherein sulphur compounds, including RSH, are converted to H₂S. The thus-formed H₂S is recovered using a sequence of absorbing and regeneration steps and returned to the Claus process.

In WO2007/06576 is disclosed a process for producing a purified gas stream from a feed gas stream comprising contaminants wherein the feed gas is subjected to a first absorption stage to obtain a purified gas stream and a sour gas stream comprising hydrogen sulphide and mercaptans and the sour gas stream is then subjected to a second absorption stage to obtain a gas stream enriched in hydrogen sulphide and a residual gas stream comprising mercaptans. In the process of WO2007/065765 the gas stream enriched in hydrogen sulphide is supplied to a Claus unit to produce elemental sulphur and a Claus off-gas and the Claus off-gas is treated in a Claus off-gas treating reactor to convert sulphur dioxide to hydrogen sulphide. The residual gas stream from the second absorption stage is treated in a dedicated RSH conversion reactor, i.e. a dedicated hydrogenation unit for removal of mercaptans. At least one of the operating conditions of the RSH conversion reactor is different from the corresponding condition of the Claus off-gas treating reactor. In particular the operating temperature or the gas hourly space velocity in the RSH conversion reactor is higher than the operating temperature or the gas hourly space velocity in the Claus off-gas treating reactor. The hydrogenation catalyst used in the RSH conversion reactor of WO2007/06576 comprises at least one metal selected from copper, cobalt, chromium, vanadium and molybdenum. In the examples of WO2007/06576 a catalyst comprising cobalt and molybdenum is used.

Disadvantages of the process of WO2007/065765 i.e. a process using a CoMo catalyst in the dedicated RSH conversion reactor, are that a relatively high temperature is required for sufficient mercaptan conversion and that rapid catalyst deactivation occurs, in particular in case the gaseous stream to be treated comprises BTEX.

### Summary of the invention

It has now been found that if a catalyst comprising NiMo or NiW as hydrogenating metals is used in a dedicated mercaptans conversion reactor, a high conversion of mercaptans can be achieved at a relatively low operating temperature.

Accordingly, the invention relates to a process for producing a purified gas stream from a feed gas stream comprising contaminants, the process comprising the following steps:
(a) removing contaminants from the feed gas stream to obtain the purified gas stream and a sour gas stream comprising hydrogen sulphide and mercaptans;
(b) separating the sour gas stream comprising hydrogen sulphide and mercaptans into a gas stream enriched in hydrogen sulphide and a residual gas stream comprising mercaptans;
(c) converting hydrogen sulphide in the gas stream enriched in hydrogen sulphide to elemental sulphur in a Claus unit, thereby obtaining a first off-gas stream comprising sulphur dioxide;
(d) converting sulphur dioxide in the first off-gas stream comprising sulphur dioxide to hydrogen sulphide in a Claus off-gas treating reactor to obtain a second off-gas stream comprising hydrogen sulphide;
(e) converting mercaptans from the residual gas stream comprising mercaptans to hydrogen sulphide in a mercaptans conversion reactor to obtain a residual gas stream comprising hydrogen sulphide,
wherein step (e) comprises contacting the residual gas stream comprising mercaptans with a hydrogenation catalyst comprising nickel and molybdenum or nickel and tungsten supported on a carrier, in the presence of hydrogen, at a temperature in the range of 260 to 350 °C.

Advantages of the process according to the invention compared to a process wherein a CoMo catalyst is used in the dedicated mercaptans conversion reactor are not only that a lower operating temperature can be used in the mercaptans conversion reactor, but also an improved catalyst stability and less formation of carbonyl sulphide.

### Detailed description of the invention

In the process according to the invention, any feed gas stream comprising hydrogen sulphide and mercaptans can be processed. Suitably, the feed gas stream comprises natural or associated gas.

The feed gas stream may comprise aliphatic mercaptans, preferably C₁-C₆ aliphatic mercaptans, more preferably C₁-C₄ aliphatic mercaptans, aromatic mercaptans, preferably phenyl mercaptan, or mixtures of aliphatic and aromatic mercaptans. The invention especially relates to the removal of methyl mercaptan, ethyl mercaptan, normal- and isopropyl mercaptan and butyl mercaptan isomers.

The process according to the invention is especially suitable for feed gas streams comprising hydrogen sulphide and optionally also significant amounts of carbon dioxide, as both compounds are efficiently removed in the liquid absorption process in step (a).

Preferably the feed gas stream comprises in the range of from 0.05 to 20 vol% hydrogen sulphide, from 1 ppmv to 1 vol% mercaptans and from 0 to 40 vol% carbon dioxide, based on the total volume of feed gas stream. More preferably, the feed gas stream comprises from 0.1 to 10 vol% hydrogen sulphide, from 20 ppmv to 1 vol% mercaptans and from 0.1 to 30 vol% carbon dioxide.

Preferably, an absorbing liquid is used in step (a) to remove contaminants by transferring contaminants from the feed gas stream to the absorbing liquid. This results in an absorbing liquid loaded with contaminants. The loaded absorbing liquid is regenerated by contacting with a regeneration gas. This results in a sour gas stream comprising hydrogen sulphide and mercaptans.

The absorbing liquid is any liquid capable of removing contaminants, in particular hydrogen sulphide, from the feed gas stream. The choice of absorbing liquid depends inter alia on the type of contaminants to be removed. In the case of a feed gas stream comprising natural gas, the major contaminants are hydrogen sulphide, mercaptans and carbon dioxide. Other contaminants may include carbonyl sulphide, carbon disulphide, thiophenes and BTEX.

A preferred absorbing liquid comprises a chemical solvent as well as a physical solvent.

Suitable chemical and physical solvents are known in the art. Any suitable solvents known in the art may be used. Examples of suitable chemical solvents are primary, secondary and/or tertiary amines. A preferred chemical solvent is a secondary or tertiary amine, more preferably an amine compound derived from ethanol amine, more especially DIPA, DEA, MMEA (monomethyl-ethanolamine), MDEA, or DEMEA (diethyl-monoethanolamine), preferably DIPA or MDEA. Suitable physical solvents are sulfolane (cyclotetramethylenesulfone) and its derivatives, aliphatic acid amides, N-methylpyrrolidone, N-alkylated pyrrolidones and the corresponding piperidones, methanol, ethanol and dialkylethers of polyethylene glycols or mixtures thereof. The preferred physical solvent is sulfolane.

The absorbing liquid may further comprise a so-called activator compound. Suitable activator compounds are piperazine, methyl-ethanolamine, or (2-aminoethyl)-ethanolamine, especially piperazine.

A particularly preferred absorbing liquid comprises sulfolane, MDEA and piperazine.

The absorbing liquid typically comprises water, preferably in the range of from 15 to 45 parts by weight, more preferably of from 15 to 40 parts by weight of water.

The operating conditions of step (a) can be adjusted to enable producing a purified gas stream from feed gas streams which, in addition to hydrogen sulphide and mercaptans, further comprises other compounds, in particular selected from the group of carbon dioxide, BTEX and other sulphur contaminants. The process offers a choice whether or not to remove compounds other than hydrogen sulphide and mercaptans, for example other sulphur-containing compounds, carbon dioxide or aromatic compounds, from the feed gas stream. Hence, different compositions of the gas stream obtained in step (a) can be achieved, suitably by adjusting the choice of absorbing liquid in step (a). Suitably, the liquid absorption is carried out at a temperature in the range of from 15 to 90 °C, more preferably from 25 to 80 °C, still more preferably from 40 to 65 °C.

The liquid absorption is suitably carried out at a pressure between 10 and 150 bara, preferably between 25 and 90 bara. Absorbing liquids comprising a chemical and a physical solvent perform well at high pressures, especially between 20 and 90 bara.

The purified gas stream obtained in step (a) is depleted of hydrogen sulphide, meaning that the concentration of hydrogen sulphide in the purified gas stream is lower than the concentration of hydrogen sulphide in the feed gas stream. It will be understood that the concentration of hydrogen sulphide in the purified gas stream obtained in step (a) depends on the concentration of hydrogen sulphide in the feed gas stream. Typically, the concentration of hydrogen sulphide in the purified gas stream is in the range of from 0.0001% to 80%, preferably from 0.0001% to 20%, more preferably from 0.0001% to 10% of the hydrogen sulphide concentration in the feed gas stream. Suitably, the concentration of hydrogen sulphide in the purified gas stream obtained in step (a) is less than 10 ppmv, preferably less than 5 ppmv.

It will be understood that the mercaptans concentration in the purified gas stream will depend on the mercaptans concentration in the feed gas stream. Suitably, the mercaptans concentration in the purified gas stream will be in the range of from 100 ppbv to 0.1 vol%. Optionally, the purified gas stream may be subjected to an additional step to further remove mercaptans, for example by adsorption of mercaptans using an adsorbent bed, followed by regeneration of the adsorbent bed which now comprises mercaptans. Suitable solid adsorbent materials for mercaptans are known in the art and include materials based on silica, silica gel, alumina or silica-alumina, or zeolites.

In the liquid absorption step, loaded absorbing liquid comprising contaminants such as hydrogen sulphide, mercaptans and optionally carbon dioxide and/or other sulphur compounds such as carbonyl sulphide and BTEX is obtained. The absorption step will usually be carried out in a continuous mode, which process also comprises the regeneration of the loaded absorbing liquid. Therefore, contaminant removal preferably involves a regeneration step wherein loaded absorbing liquid is regenerated by transferring at least part of the contaminants to a regeneration gas stream. Suitably, regeneration takes place at relatively low pressure and high temperature. The loaded absorbing liquid may contain besides hydrogen sulphide and mercaptans also appreciable amounts of non-acidic compounds from the feed gas stream e.g. hydrocarbons, carbon monoxide and hydrogen. Therefore, it may be advantageous to remove these non-acidic compounds at least partially from the loaded solvent by flashing to a pressure which is higher than the sum of the partial pressures of the compounds. In this way only very small amounts of carbon dioxide and optionally hydrogen sulphide and carbonyl sulphide are released from the solvent together with the non-acidic compounds. The regeneration is suitably carried out by heating in a regenerator at a relatively high temperature, suitably in the range of from 70 to 150 °C. The heating is preferably carried out with steam or hot oil. Preferably, the temperature increase is done in a stepwise mode. Suitably, regeneration is carried out at a pressure in the range of from 1 to 2 bara.

After regeneration, regenerated absorbing liquid is obtained and a sour gas stream comprising hydrogen sulphide and mercaptans and often also carbon dioxide, BTEX and carbonyl sulphide. Typically, regenerated absorbing liquid is used again in the absorption stage of step (a) for hydrogen sulphide removal.

In step (b), the sour gas stream comprising hydrogen sulphide and mercaptans is separated in an enrichment unit to obtain a gas stream enriched in hydrogen sulphide and a residual gas stream comprising mercaptans.

A preferred method to achieve this separation is by subjecting the sour gas stream to a selective absorption step, wherein hydrogen sulphide is absorbed preferentially. Such selective absorption of hydrogen sulphide is known in the art, for example from A Kohl, F Riesenfeld, Gas Purification, 3rd ed. Gulf Publishing Co, Houston, 1979. Selective absorption liquids include aqueous solutions of alkanol amines, such as DEA, TEA, DIPA, MDEA, polyethylene glycol dialkyl ether or N,N-dimethyl ammonium acetate. A mixture of sulfolane and alkanolamine may also be used. Other selective absorbents include N-methyl pyrrolidone, and tributyl phosphate.

In step (b), a residual gas stream comprising mercaptans is obtained. The residual gas stream may further comprise other compounds, for example carbon dioxide and/or aromatic hydrocarbons, especially BTEX, which were not absorbed in the absorption step (b). Suitably, the concentration of hydrogen sulphide in the residual gas stream will be substantially lower than the concentration of hydrogen sulphide in the feed gas stream.

Absorbed hydrogen sulphide is subsequently desorbed by regeneration as described hereinabove, yielding a gas stream enriched in hydrogen sulphide. In step (c), the gas stream enriched in hydrogen sulphide is then passed to a Claus unit, thereby obtaining a first off-gas stream comprising sulphur dioxide.

In the Claus unit, hydrogen sulphide is converted to elemental sulphur via the well-known Claus process. The Claus process is a process wherein elemental sulphur is formed by partial oxidation of the hydrogen sulphide using molecular-oxygen containing gas to form sulphur dioxide, followed by reaction of the sulphur dioxide formed with the remaining part of the hydrogen sulphide in the presence of a catalyst. The most widely used Claus catalyst is non-promoted spherical activated alumina. The Claus unit suitably comprises a combustion chamber followed by two or more catalyst beds and two or more condensers. The reaction products are cooled in these condensers and liquid elemental sulphur is recovered. A minor amount of unreacted hydrogen sulphide, and sulphur dioxide remains in the off-gas from the Claus unit. The off-gas from the Claus unit comprises sulphur dioxide.

In step (d), the first off-gas stream comprising sulphur dioxide is passed to a Claus off-gas treating reactor. In the off-gas treating reactor, sulphur dioxide is reduced to hydrogen sulphide in a hydrogenation reaction. Further, carbonyl sulphide, if present, is converted to hydrogen sulphide. A preferred off-gas treating reactor is a so-called SCOT reactor, i.e. Shell Claus Off-gas Treating reactor, as for example described in the earlier mentioned textbook by Kohl and Riesenfeld. The first off-gas stream comprising sulphur dioxide is first heated and then contacted with a catalyst, resulting in the formation of hydrogen sulphide. A second off-gas stream comprising hydrogen sulphide is obtained in the Claus off-gas treating reactor.

The temperature in the Claus off-gas treating reactor is suitably in the range of from 210 to 350 °C, preferably of 150 to 250 °C.

Preferably, the second off-gas stream comprising hydrogen sulphide is cooled to obtain a cooled second off-gas stream and in a further absorption step (f) the cooled second off-gas stream is contacted with an absorbing liquid to obtain an outlet gas stream depleted in hydrogen sulphide. The outlet gas stream may be sent to an incinerator to be combusted to obtain an exhaust gas that is very low in sulphur dioxide and may therefore be emitted to the atmosphere.

In step (e), mercaptans from the residual gas stream comprising mercaptans obtained in step (b) are converted to hydrogen sulphide in a mercaptans conversion reactor. Step (e) comprises contacting the residual gas stream comprising mercaptans with a hydrogenation catalyst comprising nickel and molybdenum or nickel and tungsten as hydrogenating metals supported on a carrier, in the presence of hydrogen, at a temperature in the range of 260 to 350 °C.

The hydrogenating metals, i.e. nickel and molybdenum or nickel and tungsten, are suitably present on the catalyst in the form of its oxides or sulphides. The carrier is preferably selected from the group consisting of alumina, silica, silica-alumina, titania, zirconia and magnesia.

Preferably, the catalyst comprises nickel and molybdenum as hydrogenating metals, supported on a carrier.

The catalyst comprises nickel and molybdenum or nickel and tungsten in a suitable amount. Typically the catalyst comprises in the range of from 0.1 to 6 wt% nickel, preferably in the range of from 1.0 to 5.5 wt%. The catalyst typically comprises in the range of from 0.1 to 20 wt% molybdenum, preferably of from 4 to 19 wt% molybdenum, or in the range of from 0.1 to 25 wt% tungsten, preferably of from 6 to 22 wt% tungsten.

In step (e), hydrogen is present. Preferably, hydrogen is added to the residual gas stream comprising mercaptans in such amount that the hydrogen concentration is in the range of from 0.1 to 5.0 vol% based on the volume of the residual gas stream comprising mercaptans, more preferably in the range of from 0.2 to 3.0 vol%, even more preferably of from 0.5 to 2.0 vol%. Hydrogen to be added may suitably be obtained by substoichimetrically combusting part of the feed gas stream. Synthesis gas, i.e. a gas mixture comprising hydrogen and carbon monoxide, is thus obtained and is added to the residual gas stream comprising mercaptans to provide for the hydrogen needed in step (e). Alternatively, hydrogen from an external source may be added to the residual gas stream comprising mercaptans.

The hydrogenating reaction in step (e) is carried out at a temperature in the range of from 260 to 350 °C, preferably of from 270 to 320 °C, more preferably of from 280 to 300 °C. It has been found that if a catalyst comprising NiMo or NiW is used, sufficient conversion of mercaptans into hydrogen sulphide can be achieved at relatively low temperatures, i.e. at a temperature of ta most 350 °C, or even at most 320 °C or at most 300 °C. At these temperatures, a NiMo or NiW catalyst shows good mercaptans conversion, appears to be stable, i.e. it maintains its conversion rate over a long time period, and produces less carbonyl sulphide than a CoMo catalyst at conditions at which comparable mercaptan conversion is achieved.

The mercaptans conversion reactor in step (e) may be operated at any suitable gas hourly space velocity, preferably a gas hourly space velocity in the range of from 1000 to 5000 hr⁻¹, more preferably of from 1100 to 3000 hr¹, even more preferably of from 1500 to 2500 hr⁻¹.

The process according to the invention is advantageously used for feed gas stream that comprise carbon dioxide. If the feed gas stream comprises carbon dioxide, the residual gas stream comprising mercaptans also comprises substantial amounts of carbon dioxide, typically at least 50 vol%. The process according to the invention is particularly suitable for feed gas streams that further comprise one or more aromatic hydrocarbons selected from the group consisting of benzene, toluene, ethylbenzene, and xylene (BTEX). If the feed gas comprises BTEX, such BTEX will for a large part be present in the residual gas stream comprising mercaptans. It has been found that step (e) of the process according to the invention is particularly suitable for treating a residual gas stream comprising BTEX, for example in a concentration in the range of up to 5 vol%.

Preferably, the residual stream comprising mercaptans further comprises one or more aromatic hydrocarbons selected from the group consisting of benzene, toluene, ethylbenzene, and xylene, more preferably in a concentration in the range of from 0.1 to 8 vol%, even more preferably of from 0.5 to 5 vol% based on the total volume of the residual gas stream comprising mercaptans.

Preferably, the residual stream comprising mercaptans further comprises carbon dioxide, more preferably at least 50 vol% carbon dioxide, even more preferably at least 60 vol% carbon dioxide, still more preferably in the range of from 70 to 95 vol% carbon dioxide based on the total volume of the residual gas stream comprising mercaptans.

The residual gas stream comprising hydrogen sulphide obtained in step (e) may be supplied to the Claus unit to convert hydrogen sulphide in the residual gas stream to elemental sulphur.

Alternatively, the residual gas stream comprising hydrogen sulphide obtained in step (e) is cooled to obtain a cooled residual gas stream comprising hydrogen sulphide and the cooled stream is then contacted with an absorbing liquid to obtain an outlet gas stream depleted in hydrogen sulphide. Preferably, both the residual gas stream comprising hydrogen sulphide obtained in step (e) and the off-gas from the Claus off-gas treating reactor, i.e. the second off-gas stream comprising hydrogen sulphide, are cooled and both contacted with the absorbing liquid in step (f) to obtain the outlet gas stream depleted in hydrogen sulphide. The outlet gas stream thus obtained is preferably sent to an incinerator to be combusted and to obtain an exhaust gas. Since the amount of sulphur dioxide in such exhaust gas is low, the exhaust gas may be emitted to the atmosphere whilst still being in compliance with strict environmental regulations.

By contacting the residual gas stream comprising hydrogen sulphide and/or the second off-gas stream comprising hydrogen sulphide with an absorbing liquid, loaded absorbing liquid is obtained. The loaded absorbing liquid is preferably regenerated by contacting it with a stripping gas. A gas stream comprising hydrogen sulphide is thus obtained in the stripper. Such gas stream is preferably recycled to the Claus unit.

The invention is illustrated by the following nonlimiting examples.

### Examples

### EXAMPLE 1

A gas stream similar to a residual gas stream comprising mercaptans obtained in an acid gas enrichment unit was subjected to a hydrogenation reaction at a temperature in the range of from 280 to 320 °C and a gas hourly space velocity (GHSV) of 1500 hr⁻¹ over a catalyst comprising nickel and molybdenum supported on a carrier. Two different experiments were carried out, each with a different NiMo catalyst. The composition of the gas stream is given in Table 1. The composition of the catalysts is given in Table 2. Before starting the experiment, the catalysts were sulphided in the unit by heating to 130°C in N₂, holding for 1 hour at 130°C, and heating to 180°C in N₂ at 1°C/min. At 180°C, the gas composition was gradually changed to 1.5 %v H₂, 3.5%v H₂S and 95%v N₂, after which the temperature was increased to 300°C at a rate of 1°C/min and held at 300°C for 12 hours.

### Experiment 1

A gas stream with a composition as given in Table 1 was contacted with sulphided catalyst 1 at a GHSV of 1500 hr⁻¹ and a temperature in the range of 280 °C to 320 °C during 16 days. The temperature profile and the mercaptans conversion during those 12 days is given in Table 3.

### Experiment 2

A gas stream with a composition as given in Table 1 was contacted with sulphided catalyst 2 at a GHSV of 1500 hr⁻¹ and a temperature in the range of 280 °C to 300 °C during 12 days. The temperature profile and the mercaptans conversion in % during those 12 days is given in Table 3.

**Table 1 Composition of gas stream**

| Compound | Concentration (mol%) |
|---|---|
| H₂O | 6.45 |
| CO₂ | 78.87 |
| H₂S | 0.04 |
| COS | 0 |
| N₂ | 2.15 |
| H₂ | 2.52 |
| CH₄ | 6.25 |
| C5-C10 hydrocarbons | 1.45 |
| CH₃SH | 0.08 |
| C₂H₅SH | 0.67 |
| Benzene | 0.44 |
| Toluene | 0.98 |
| xylene | 0.13 |

**Table 2 Composition of catalysts**

| Catalyst | Ni | Mo | carrier |
|---|---|---|---|
| 1 | 2.6 wt% | 8 wt% | Alumina |
| 2 | 1.5 wt% | 6 wt% | Alumina |

It can be seen that a high mercaptans conversion is achieved at a relatively low operating temperature. For CoMo catalysts a temperature of 350 °C is typically needed to achieve comparable mercaptan conversions.

The experiments further show that the catalysts show a high stability. After several days, the mercaptans conversion rate is still comparable to the initial conversion rate.

**Table 3 - Temperature profile and mercaptans conversion**

| | Catalyst 1 | | | Catalyst 2 | | |
|---|---|---|---|---|---|---|
| Day | T (°C) | CH₃SH | C₂H₅SH | T (°C) | CH₃SH | C₂H₅SH |
| 1 | 280 | 87.8 | 98.0 | 280 | 84.5 | 96.4 |
| 2 | 280 | 88.6 | 98.4 | 280 | 84.1 | 96.4 |
| 3 | 300 | 96.9 | 99.4 | 300 | | |
| 4 | 320 | | | 300 | | |
| 5 | 320 | 98.9 | 99.7 | 300 | 92.7 | 98.5 |
| 6 | 300 | n.a. | 98.0 | 320 | 97.6 | 99.6 |
| 7 | 300 | | | 300 | 94.6 | 99.5 |
| 8 | 300 | 98.6 | 99.5 | 300 | 91.9 | 98.4 |
| 9 | 300 | | | 300 | 91.9 | 98.4 |
| 12 | 300 | 96.9 | 99.5 | 300 | 90.6 | 98.2 |
| 13 | 300 | 96.6 | 99.4 | | | |
| 16 | 300 | 96.8 | 99.3 | | | |

### EXAMPLE 2

To test the long term stability of NiMo catalysts in step (e) of the process according to the invention, catalyst 1 was used for conversion of mercaptans in a gas stream having the composition as shown in Table 1 (a gas stream similar to residual gas comprising mercaptans obtained in an acid gas enrichment unit) for nine weeks (63 days). During the first week, the conversion reactor was operated at a temperature of 280 °C, during the further eight weeks at 300 °C. The gas hourly space velocity was kept at 1500 hr⁻¹ during the entire run time. The mercaptans conversion was determined at several points of time during the run time, and after nine weeks the amount of deposition on the catalyst was measured.

The results of the conversion measurements are shown in Table 4. After nine weeks, the conversions of methyl mercaptan and of ethyl mercaptans were still at the same level as in the first week at 300 °C, i.e. above 95% for methyl mercaptan and above 99% for ethyl mercaptans. In Table 5 is shown.

After nine weeks, the catalyst had 2.5 wt% carbon deposits, of which 0.5 wt% was coke. In a comparable experiment with a CoMo catalyst at 350 °C, i.e. the temperature needed for a comparable mercaptans conversion, the catalyst had 10 wt% carbon deposits, of which 9.0 wt% was coke.

During the entire experiment (nine weeks), the concentration of carbonyl sulphide in the gaseous effluent was quite constant at a level of 50 -70 ppmv. In a similar experiment with a CoMo catalyst at 350 °C, the carbonyl sulphide concentration in the effluent was 250-400 ppmv.

**Table 4 - Mercaptan conversion in wt%**

| Day | T (°C) | CH₃SH conversion (wt%) | C₂H₅SH conversion (wt%) |
|---|---|---|---|
| 2 | 280 | 83.7 | 95.5 |
| 3 | 280 | 80.1 | 95.9 |
| 8 | 300 | 95.2 | 99.1 |
| 15 | 300 | 96.3 | 99.7 |
| 22 | 300 | 97.7 | 99.3 |
| 29 | 300 | 98.4 | 99.4 |
| 36 | 300 | 98.3 | 99.4 |
| 49 | 300 | 99.0 | 99.5 |
| 56 | 300 | 87.7 | 99.5 |
| 60 | 300 | 97.3 | 99.4 |

## Claims

1. A process for producing a purified gas stream from a feed gas stream comprising contaminants, the process comprising the following steps:
(a) removing contaminants from the feed gas stream to obtain the purified gas stream and a sour gas stream comprising hydrogen sulphide and mercaptans;
(b) separating the sour gas stream comprising hydrogen sulphide and mercaptans into a gas stream enriched in hydrogen sulphide and a residual gas stream comprising mercaptans;
(c) converting hydrogen sulphide in the gas stream enriched in hydrogen sulphide to elemental sulphur in a Claus unit, thereby obtaining a first off-gas stream comprising sulphur dioxide;
(d) converting sulphur dioxide in the first off-gas stream comprising sulphur dioxide to hydrogen sulphide in a Claus off-gas treating reactor to obtain a second off-gas stream comprising hydrogen sulphide;
(e) converting mercaptans from the residual gas stream comprising mercaptans to hydrogen sulphide in a mercaptans conversion reactor to obtain a residual gas stream comprising hydrogen sulphide,
wherein step (e) comprises contacting the residual gas stream comprising mercaptans with a hydrogenation catalyst comprising nickel and molybdenum or nickel and tungsten supported on a carrier, in the presence of hydrogen, at a temperature in the range of 260 to 350 °C.

2. A process according to claim 1, wherein the residual gas stream comprising mercaptans further comprises one or more aromatic hydrocarbons selected from the group consisting of benzene, toluene, ethylbenzene, and xylene.

3. A process according to claim 1 or 2, wherein the residual gas stream comprising mercaptans further comprises carbon dioxide.

4. A process according to claim 3, wherein the residual gas stream comprising mercaptans comprises in the range of from 70 to 95 vol% carbon dioxide.

5. A process according to any one of the preceding claims, wherein the hydrogenation catalyst in step e) comprises nickel and molybdenum supported on a carrier.

6. A process according to any one of the preceding claims, wherein the temperature in step e) is in the range of from 270 to 320°C.

7. A process according to any one of the preceding claims, wherein the second off-gas stream comprising hydrogen sulphide is cooled to obtain a cooled second off-gas stream and wherein the process comprises a further step (f) wherein the cooled second off-gas stream is contacted with an absorbing liquid to obtain an outlet gas stream depleted in hydrogen sulphide.

8. A process according to any one of the preceding claims, wherein the residual gas stream comprising hydrogen sulphide obtained in step (e) is supplied to the Claus unit to convert hydrogen sulphide in the residual gas stream to elemental sulphur.

9. A process according to 7, wherein the residual gas stream comprising hydrogen sulphide obtained in step (e) is cooled to obtain a cooled residual gas stream comprising hydrogen sulphide and wherein both the cooled residual gas stream comprising hydrogen sulphide and the cooled second off-gas stream are contacted with the absorbing liquid in step (f) to obtain the outlet gas stream depleted in hydrogen sulphide.

10. A process according to claim 7 or 9, wherein the outlet gas stream depleted in hydrogen sulphide is combusted in an incinerator to obtain an exhaust gas.
